(19) **Europäisches Patentamt**
**European Patent Office**
**Office européen des brevets**

(11) **EP 4 389 575 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **23213678.8**

(22) Anmeldetag: **01.12.2023**

(51) Internationale Patentklassifikation (IPC):
*B62J 45/411* (2020.01)    *B62J 45/413* (2020.01)
*B62M 6/50* (2010.01)    *B62M 9/123* (2010.01)
*B62M 9/133* (2010.01)

(52) Gemeinsame Patentklassifikation (CPC):
**B62M 9/123; B62J 45/411; B62J 45/413; B62M 6/50; B62M 9/133**

(54) **VERFAHREN ZUM VORHERSAGEN EINES ZEITPUNKTS EINES ZUKÜNFTIGEN EXTREMWERTS IN EINEM DREHMOMENTVERLAUF EINES FAHRZEUGS**

METHOD FOR PREDICTING A TIME POINT OF A FUTURE EXTREME VALUE IN A TORQUE CURVE OF A VEHICLE

PROCÉDÉ DE PRÉDICTION D'UN MOMENT D'UNE VALEUR EXTRÊME FUTURE DANS UN PROFIL DE COUPLE D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.12.2022 DE 102022214173**

(43) Veröffentlichungstag der Anmeldung:
**26.06.2024 Patentblatt 2024/26**

(73) Patentinhaber: **Robert Bosch GmbH**
**70442 Stuttgart (DE)**

(72) Erfinder: **Stegmaier, Juergen**
**72827 Wannweil (DE)**

(56) Entgegenhaltungen:
CN-C- 1 078 554    US-A- 5 027 303
US-A1- 2021 061 414    US-A1- 2022 119 074
US-B2- 11 345 441

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Vorhersagen eines Zeitpunkts eines zukünftigen Extremwerts in einem Drehmomentverlauf eines Fahrzeugs, insbesondere eines einspurigen Fahrzeugs wie ein eBike.

Die Erfindung betrifft außerdem ein Verfahren zum Schalten eines Getriebes eines Fahrzeugs, insbesondere eines einspurigen Fahrzeugs wie ein eBike,

Die Erfindung betrifft weiter ein Fahrzeug, insbesondere ein einspuriges Fahrzeug wie ein eBike,

Obwohl allgemein auf Signalverläufe anwendbar, wird die folgende Erfindung anhand von Drehmomentverläufen in eBikes erläutert

Stand der Technik

EBikes umfassen einen Unterstützungsantrieb, der ein von einem Fahrer auf das eBike ausgeübtes Drehmoment verstärkt und so den Fahrer bei der Fahrt unterstützt.

Die eBikes können dabei mit einem Getriebe, insbesondere einem elektrischen oder Automatik-Getriebe, versehen sein. Dabei wechselt das Automatik-Getriebe automatisch den Gang des Getriebes ja nach anliegendem Drehmoment beziehungsweise Drehzahl. Wenn ein Fahrer während des Schaltvorgangs ein hohes Drehmoment erzeugt, das durch die Antriebseinheit noch weiter verstärkt wird, kann das resultierende Drehmoment zu Beeinträchtigungen oder Reibung in dem Getriebe führen. Gleiches gilt für Schaltgetriebe, wenn der Fahrer während des Schaltvorgangs ein hohes Drehmoment erzeugt. Das Dokument US2021/061414A1 zeigt ein Verfahren zur Verbesserung des Schaltens, indem eine Steuereinheit dazu ausgebildet ist, einen zulässigen Schaltzeitabschnitt anhand des Drehmoments und der Kadenz zu ermitteln.

Offenbarung der Erfindung

In einer Ausführungsform stellt die vorliegende Erfindung ein Verfahren zum Vorhersagen eines Zeitpunkts eines zukünftigen Extremwerts in einem Drehmomentverlauf eines Fahrzeugs bereit, insbesondere eines einspurigen Fahrzeugs wie ein eBike, umfassend die Schritte:

- Ermitteln eines Drehmomentwerts zu mehreren Zeitpunkten,
- Bestimmen eines Extremwerts der ermittelten Drehmomentwerte zu jedem Zeitpunkt,
- Messen einer verstrichenen Zeit und/oder eines von einem Pedal des Fahrzeugs zurückgelegten Winkels seit dem Zeitpunkt, an dem der Extremwert bestimmt worden ist,
- Ermitteln einer Periodendauer des Drehmomentverlaufs, und
- Vorhersagen zumindest eines Zeitpunkts eines zukünftigen Extremwerts anhand der ermittelten Periodendauer sowie der gemessenen Zeit und/oder dem zurückgelegten Winkel.

In einer Ausführungsform stellt die vorliegende Erfindung ein Verfahren zum Schalten eines Getriebes eines Fahrzeugs bereit, insbesondere eines einspurigen Fahrzeugs wie ein eBike, umfassend die Schritte:

- Vorhersagen eines Zeitpunkts, an dem ein an dem Fahrzeug anliegendes Drehmoment minimal ist anhand eines Verfahrens gemäß einem der Ansprüche 1-7, und
- Schalten des Getriebes des Fahrzeugs zu dem vorhergesagten Zeitpunkt. In einer Ausführungsform stellt die vorliegende Erfindung ein Fahrzeug bereit, insbesondere ein einspuriges Fahrzeug wie ein eBike, auf das von einem Fahrer ein Drehmoment aufbringbar ist, sodass ein regelmäßiger Drehmomentverlauf entsteht, umfassend:

- Einen Drehmomentsensor, ausgebildet zum Ermitteln eines Drehmomentwerts zu mehreren Zeitpunkten,
- Eine Bestimmungseinrichtung, ausgebildet zum Bestimmen eines Extremwerts der ermittelten Drehmomentwerte,
- Eine Messeinrichtung, ausgebildet zum Messen einer verstrichenen Zeit und/oder eines von einem Pedal des Fahrzeugs zurückgelegten Winkels seit dem Zeitpunkt, an dem der Extremwert bestimmt worden ist,
- Eine Ermittlungseinrichtung, ausgebildet zum Ermitteln einer Periodendauer des Drehmomentverlaufs,
- Eine Vorhersageeinrichtung, ausgebildet zum Vorhersagen zumindest eines Zeitpunkts eines zukünftigen Extremwerts anhand der ermittelten Periodendauer sowie der gemessenen Zeit und/oder dem zurückgelegten Winkel.

Einer der damit erzielten Vorteile ist, dass der nächstmögliche Zeitpunkt, an dem ein minimales Drehmoment von dem Fahrer erzeugt wird, auf einfache Weise berechnet werden kann. Ein weiterer Vorteil ist, dass die Berechnung schnell und effizient durchgeführt werden kann. Ein weiterer Vorteil ist, dass sowohl Maxima als auch Minima des Drehmoments vorhergesagt werden können.

Der Begriff "Extremwert" ist im weitesten Sinne zu verstehen und bezieht sich, insbesondere in den Ansprüchen vorzugsweise in der Beschreibung auf einen Wert in einem Verlauf, beispielsweise einem Drehmomentverlauf, der innerhalb eines gewissen Zeitfensters der kleinste oder der größte Wert ist. Insbesondere sind die Extremwerte die Maxima und Minima, also die Berge und Täler, eines sinusförmigen Verlaufs, in denen die Änderungsrate des Verlaufs annähernd null beträgt.

Der Begriff "Periodendauer" ist im weitesten Sinne zu verstehen und bezieht sich, insbesondere in den Ansprüchen, vorzugsweise in der Beschreibung auf die Zeit, die benötigt wird, bis ein Pedal des Fahrzeugs eine vollständige Umdrehung durchgeführt hat. Insbesondere weist ein Drehmomentverlauf der Pedale während der Periodendauer zwei Berge und zwei Täler auf, da jeweils im oberen und unteren Totpunkt der Pedale ein minimales Drehmoment erzeugt wird.

Weitere Merkmale, Vorteile und weitere Ausführungsformen der Erfindung sind im Folgenden beschrieben oder werden dadurch offenbar.

Gemäß einer vorteilhaften Weiterbildung der Erfindung erfolgt das Messen des von dem Pedal des Fahrzeugs zurückgelegten Winkels und/oder das Ermitteln der Periodendauer mittels eines Drehzahlsensors. Bei einem regelmäßigen Drehmomentverlauf sind aufeinanderfolgende Extremwerte jeweils um eine halbe Periodendauer des Verlaufs beziehungsweise eine halbe Rotation der Pedale versetzt. Somit kann die Periodendauer zur Bestimmung des nächsten Extremwerts genutzt werden. Die Periodendauer und/oder der zurückgelegte Winkel kann mittels eines Drehzahlsensors bestimmt werden, da die Periodendauer der Inversen der Drehzahl entspricht und der zurückgelegte Winkel dem Integral der Drehzahl über der Zeit entspricht. Ein Vorteil hiervon ist, dass die Periodendauer und der zurückgelegte Winkel auf einfache Weise bestimmt werden können.

Gemäß einer vorteilhaften Weiterbildung der Erfindung erfolgt das Messen der verstrichenen Zeit anhand eines Zeitmessers, wobei der Zeitmesser zurückgesetzt wird, wenn ein neuer Extremwert bestimmt wird. Um die Zeit seit dem letzten Extremwert zu messen kann ein Zeitmesser, beispielsweise ein Timer, genutzt werden. Dieser wird jedes Mal zurückgesetzt, wenn ein neuer Extremwert bestimmt wird. Somit zeigt der Zeitmesser immer die Zeit seit dem letzten bestimmten Extremwert an. Ein Vorteil hiervon ist, dass die Zeit auf effiziente Weise bestimmt werden kann.

Gemäß einer vorteilhaften Weiterbildung der Erfindung wird die Periodendauer anhand eines Vergleichs der Zeitpunkte von zwei bestimmten Extremwerten ermittelt. Wenn bereits zwei oder mehr Extremwerte bestimmt worden sind, kann davon ausgehend die Periodendauer bestimmt werden, da zwei gleiche Extremwerte - das heißt zwei Minima oder zwei Maxima - bei einem periodischen Signal jeweils um eine halbe Periodendauer versetzt auftreten. Ein Vorteil hiervon ist, dass die Periodendauer ohne einen Drehzahlsensor bestimmt werden kann.

Gemäß einer vorteilhaften Weiterbildung der Erfindung erfolgt das Vorhersagen des zumindest einen Zeitpunkts des zukünftigen Extremwerts lediglich dann, wenn die gemessene Zeit größer als ein Schwellwert ist. Es ist möglich, dass bei der Extremwertbestimmung innerhalb kurzer Zeitabstände mehrere neue Extremwerte ermittelt werden, da das Drehmoment kontinuierlich steigt oder sinkt. Außerdem können aufgrund von Unregelmäßigkeiten im Fahrverlauf lokale Extremwerte im Drehmomentverlauf auftreten. In diesem Fall kann das Vorhersagen ausgesetzt werden, bis ein Extremwert bestimmt wird, der für einen bestimmten Zeitraum nicht ersetzt wird und somit mit hoher Wahrscheinlichkeit ein echtes Minimum oder Maximum ist. Ein Vorteil hiervon ist, dass unnötige Berechnungen zum Vorhersagen des nächsten Zeitpunkts vermindert werden können. Außerdem kann davon ausgegangen werden, dass ein potentieller Extremwert eindeutig ein Extremwert ist, wenn die vergangene Zeit seit Messung des Extremwerts größer als der Schwellwert ist. Somit kann ab diesem Zeitpunkt der Zeitzähler zurückgesetzt werden und der nächste Extremwert gesucht werden.

Gemäß einer vorteilhaften Weiterbildung der Erfindung wird zum Bestimmen des Extremwerts geprüft, ob ein aktuell ermittelter Drehmomentwert größer oder kleiner als ein aktueller Extremwert ist. Das anliegende Drehmoment kann kontinuierlich gemessen werden. Wenn beispielsweise ein Minimum des Drehmoments ermittelt werden soll, kann das aktuelle Minimum gespeichert werden. Anschließend wird jeder neu ermittelte Drehmomentwert mit dem aktuellen Minimum verglichen. Wenn der Drehmomentwert kleiner als das aktuelle Minimum ist, wird dieser Drehmomentwert als das neue Minimum gesetzt. Auf diese Weise kann ein Extremwert schnell bestimmt werden.

Gemäß einer vorteilhaften Weiterbildung der Erfindung werden die Zeitpunkte des nächsten und des übernächsten Extremwerts vorhergesagt. Ein Vorteil hiervon ist, dass der übernächste Zeitpunkt genutzt werden kann, wenn eine Aktion, beispielsweise ein Schalten des Getriebes, bis zum nächstmöglichen Extremwert nicht durchgeführt werden kann, weil zu wenig Zeit vorhanden ist.

Gemäß einer vorteilhaften Weiterbildung der Erfindung umfasst das Fahrzeug eine Schalteinrichtung, die dazu ausgebildet ist, ein Getriebe des Fahrzeugs zu einem Zeitpunkt zu schalten, an dem die Vorhersageeinrichtung ein Minimum vorhergesagt hat. Ein Vorteil hiervon ist, dass das Fahrzeug zu einem Zeitpunkt geschaltet wird, an dem das von dem Fahrer erzeugte Drehmoment minimal ist.

Weitere wichtige Merkmale und Vorteile der Erfindung ergeben sich aus den Unteransprüchen, aus den Zeichnungen und aus der dazugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert.

Dabei zeigt in schematischer Form

Figur 1     ein Ablaufdiagramm mit Schritten eines Verfahrens gemäß einer Ausführungsform der vorliegenden Erfindung,

Figur 2     einen Verlauf eines Drehmoments gemäß einer Ausführungsform der vorliegenden Erfindung,

Figur 3     Schritte eines Verfahrens gemäß einer Ausführungsform der vorliegenden Erfindung, und

Figur 4     ein Fahrzeug gemäß einer Ausführungsform der vorliegenden Erfindung,

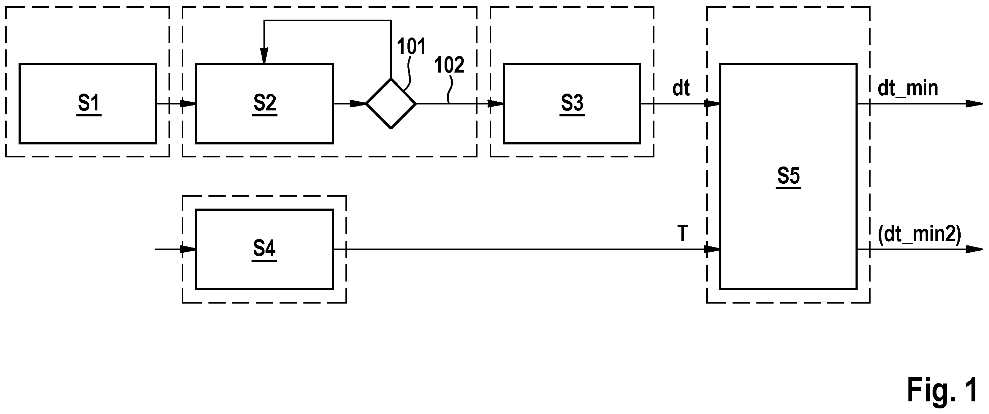

Figur 1 zeigt in schematischer Form ein Ablaufdiagramm mit Schritten eines Verfahrens gemäß einer Ausführungsform der vorliegenden Erfindung.

In einem ersten Schritt S1 wird ein Drehmomentwert zu mehreren Zeitpunkten ermittelt. Beispielsweise können die Drehmomentwerte mittels eines Drehmomentsensors ermittelt werden. Die Drehmomentwerte entsprechen dem Drehmoment, das von einem Fahrer auf Pedale des Fahrzeugs aufgebracht wird. Durch die Messung des Drehmoments zu mehreren Zeitpunkten kann ein Verlauf von Drehmomentwerten generiert werden.

In einem weiteren Schritt S2 wird ein Extremwert der ermittelten Drehmomentwerte zu jedem Zeitpunkt bestimmt. Beispielsweise wird ein Minimum der Drehmomentwerte bestimmt. Hierfür wird der zuletzt ermittelte Drehmomentwert mit dem aktuellen Minimum verglichen und wenn der zuletzt ermittelte Drehmomentwert kleiner als das aktuelle Minimum ist, wird dieser Drehmomentwert das neue Minimum. Da das Tretdrehmoment eines Fahrers bedingt durch die Pedalbewegung annähernd sinusförmig ist, können auf diese Weise die Extremwerte innerhalb des Drehmomentverlaufs bestimmt werden.

In einem weiteren Schritt S3 wird die verstrichene Zeit und/oder ein von einem Pedal des Fahrzeugs zurückgelegter Winkel seit dem Zeitpunkt, an dem der Extremwert bestimmt worden ist, gemessen. Beispielsweise wird hierfür ein Zeitmesser genutzt, der fortlaufend die Sekunden zählt. In Schritt S2 wird hierfür eine Entscheidung 101 getroffen. Immer wenn in Schritt S2 ein neuer Extremwert bestimmt wird, wird der Zeitmesser zurückgesetzt 102. Auf diese Weise wird immer die verstrichene Zeit seit dem zuletzt ermittelten Extremwert bestimmt. Alternativ oder zusätzlich kann in Schritt S3 der von einem Pedal des Fahrzeugs zurückgelegte Winkel mittels eines Drehzahlsensors bestimmt werden. Hierfür wird die aktuelle Drehzahl der Pedale gemessen und die gemessenen Werte über die Zeit integriert. Die Bestimmung des zurückgelegten Winkels ist insbesondere dann vorteilhaft, wenn die Drehzahl der Pedale nicht konstant, sondern instationär ist. Der zurückgelegte Winkel kann analog zu der verstrichenen Zeit immer dann zurückgesetzt werden, wenn ein neuer Extremwert bestimmt wird.

In einem weiteren Schritt S4 wird die Periodendauer des Drehmomentverlaufs ermittelt. Die Periodendauer kann beispielsweise mit dem Drehzahlsensor bestimmt werden, da die Periodendauer der Inversen der Drehzahl entspricht. Es ist ebenfalls möglich, dass die Periodendauer anhand von ermittelten Extremwerten bestimmt wird. Der durch die Pedale erzeugte sinusförmige Drehmomentverlauf weist pro Umdrehung der Pedale zwei Maxima und zwei Minima auf, also jeweils zwei obere und untere Extremwerte. Somit entspricht die Periodenlänge der doppelten Zeit zwischen zwei aufeinanderfolgenden Maxima oder Minima.

In einem weiteren Schritt S5 wird zumindest ein Zeitpunkt eines zukünftigen Extremwerts anhand der ermittelten Periodendauer sowie der gemessenen Zeit und/oder dem zurückgelegten Winkel vorhergesagt. Pro Periodendauer weist der Drehmomentverlauf zwei Minima und zwei Maxima auf. Somit kann der Zeitpunkt, an dem das nächste Minimum beziehungsweise das nächste Maximum des Drehmomentverlaufs entstehen wird durch folgende Formel abgeschätzt werden:

$$dt_{min} = \frac{T}{2} - dt$$

Dabei ist:

$dt_{min}$: Zeit bis zum nächsten Extremwert (beispielsweise Minimum)
T: Periodendauer
dt: verstrichene Zeit seit dem letzten Extremwert

Es ist ebenfalls möglich, den übernächsten Extremwert abzuschätzen, wenn mehr Zeit benötigt wird:

$$dt_{min2} = T - dt$$

Dabei ist:

$dt_{min2}$: Zeit bis zum übernächsten Extremwert (beispielsweise Minimum)

Es ist ebenfalls möglich, dass der Zeitpunkt des nächsten Extremwerts anhand des zurückgelegten Winkels des Pedals berechnet wird, anhand der Formel:

$$dt_{min} = \frac{T}{2} - \varphi * T$$

dabei ist:

$\varphi$: zurückgelegter Winkel eines Pedals seit dem letzten Extremwert

Es ist möglich, dass die Berechnung des Zeitpunkts des nächstmöglichen Extremwerts ausgesetzt wird, solange die verstrichene Zeit seit dem letzten Extremwert kleiner als ein Schwellwert ist. Hierdurch wird verhindert, dass lokale Extrema für die Zeitberechnung genutzt werden. Beispielsweise kann gefordert werden, dass die verstrichene Zeit mindestens 50 ms, vorzugsweise mindestens 100 ms, insbesondere mindestens 200 ms betragen muss. Es ist ebenfalls möglich, dass die verstrichene Zeit mindestens ein Sechstel der Periodendauer, vorzugsweise ein Viertel der Periodendauer, insbesondere mindestens ein Drittel der Periodendauer erreicht haben muss.

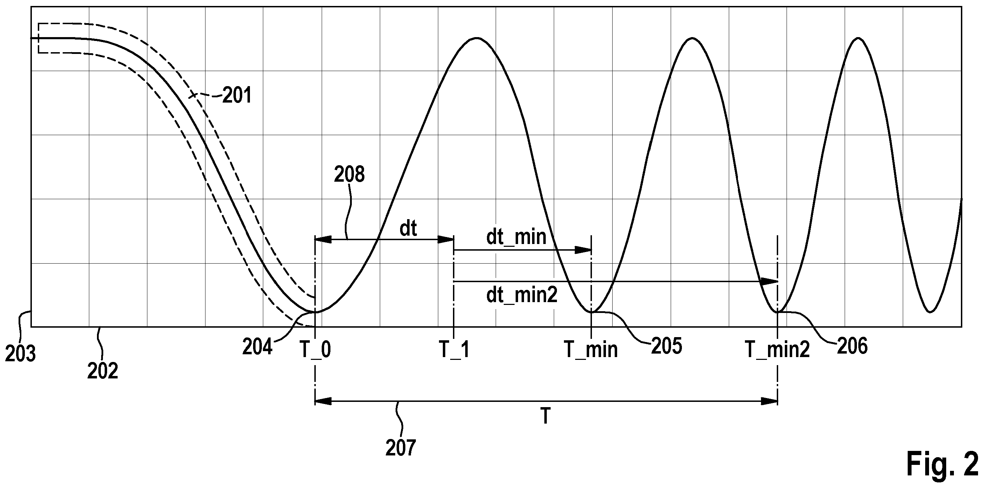

Figur 2 zeigt in schematischer Form einen Verlauf eines Drehmoments gemäß einer Ausführungsform der vorliegenden Erfindung.

Gezeigt ist ein Verlauf 201 eines von einem Fahrer erzeugten Drehmoments eines einspurigen Fahrzeugs. Die X-Achse 202 zeigt die Zeit in Sekunden und die Y-Achse 203 zeigt das Drehmoment in Nm. Zunächst sinkt das Drehmoment 201 bis es zum Zeitpunkt T_0 ein Minimum 204 aufweist. Das nächste Minimum 205 wird somit nach einer halben Periodendauer 207 zum Zeitpunkt T_min erwartet und das übernächste Minimum 206 nach einer ganzen Periodendauer 207 zum Zeitpunkt T_min2.

Jedoch ist zum Zeitpunkt T_0 des Minimums 204 noch nicht eindeutig, dass es sich bei Minimum 204 tatsächlich um das globale Minimum und nicht um ein lokales Minimum handelt. Deswegen wird ein Timer gestartet, der jedes Mal zurückgesetzt wird, wenn ein neues Minimum gefunden wird. Zum Zeitpunkt T_0 des Minimums 204 wird der Timer folglich ein letztes Mal zurückgesetzt und zählt die Sekunden seit dem Zeitpunkt T_0. Sobald ein Schwellwert 208 an Zeit überschritten wird, ist eindeutig, dass das Minimum 204 tatsächlich das globale Minimum ist. Der Schwellwert 208 entspricht hier einem Viertel der Periodendauer 207.

Somit kann zu einem beliebigen Zeitpunkt T_1 - in Figur 2 ist T_1 beispielhaft der Zeitpunkt an dem der Schwellwert 208 überschritten wird - der Zeitpunkt T_min des nächsten Minimums 205 bestimmt werden. Dieser wird nach einer halben Periodenlänge 207 abzüglich der bereits verstrichenen Zeit dt seit dem Zeitpunkt T_0 des Minimums 204 erwartet. Die verstrichene Zeit dt entspricht der Differenz T_1-T_0. Analog wird das übernächste Minimum 206 nach einer ganzen Periodendauer 207 abzüglich der bereits verstrichenen Zeit dt erwartet. Somit verbleibt dt_min Zeit bis zum nächsten minimalen Drehmoment 205 und es verbleibt dt_min2 Zeit bis zum übernächsten Minimum 206.

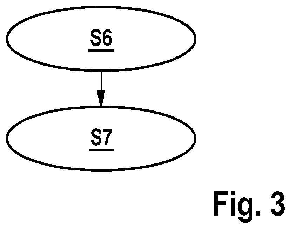

Figur 3 zeigt in schematischer Form Schritte eines Verfahrens gemäß einer Ausführungsform der vorliegenden Erfindung.

Mittels des in Figur 2 gezeigten Verfahrens kann ein Getriebe eines Fahrzeugs optimal geschaltet werden.

Hierfür wird in einem Schritt S6 ein Zeitpunkt vorhergesagt, an dem ein an dem Fahrzeug anliegendes Drehmoment minimal ist. Der Zeitpunkt kann insbesondere gemäß den Schritten S1 bis S5 gemäß Figur 1 ermittelt werden.

In einem weiteren Schritt S7 wird das Getriebe des Fahrzeugs an dem vorhergesagten Zeitpunkt geschaltet.

Es ist ebenfalls denkbar, dass ein Maximum vorhergesagt wird und dass das Fahrzeug nicht in dem vorhergesagten Zeitpunkt geschaltet wird, sondern lediglich danach und/oder davor, sodass das anliegende Drehmoment geringer ist.

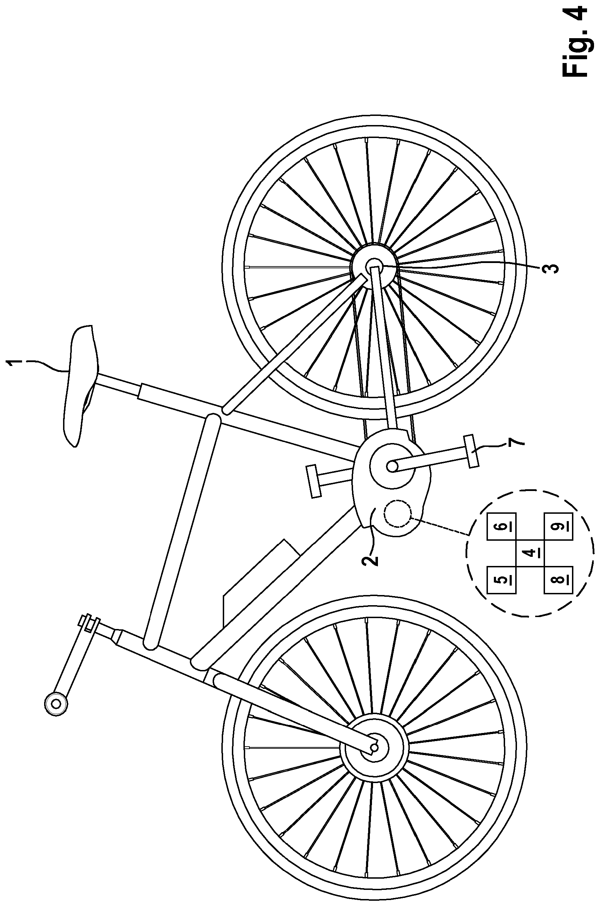

Figur 4 zeigt in schematischer Form ein Fahrzeug gemäß einer Ausführungsform der vorliegenden Erfindung.

Gezeigt ist ein Fahrzeug 1, hier in Form eines eBikes, mit einer Antriebseinrichtung 2 und einem Getriebe 3. Das Getriebe 3 kann ein Automatik-Getriebe und/oder ein elektrisch schaltbares Getriebe sein. Mittels des Fahrzeugs 1 kann ein Zeitpunkt bestimmt werden, an dem das Getriebe 3 geschaltet werden kann, da zu diesem Zeitpunkt ein voraussichtlich minimales Drehmoment anliegt. Hierfür weist das Fahrzeug 1 auf:

- Einen Drehmomentsensor 4, ausgebildet zum Ermitteln eines Drehmomentwerts zu mehreren Zeitpunkten,
- Eine Bestimmungseinrichtung 5, ausgebildet zum Bestimmen eines Extremwerts der ermittelten Drehmomentwerte,
- Eine Messeinrichtung 6, ausgebildet zum Messen einer verstrichenen Zeit und/oder eines von einem Pedal 7 des Fahrzeugs 1 zurückgelegten Winkels seit dem Zeitpunkt, an dem der Extremwert bestimmt worden ist,
- Eine Ermittlungseinrichtung 8, ausgebildet zum Ermitteln einer Periodendauer des Drehmomentverlaufs,

    - Eine Vorhersageeinrichtung 9, ausgebildet zum Vorhersagen zumindest eines Zeitpunkts eines zukünftigen Extremwerts anhand der ermittelten Periodendauer sowie der gemessenen Zeit und/oder dem zurückgelegten Winkel.

Das Fahrzeug ist insbesondere ausgebildet, die Schritte S1 bis S5 gemäß Figur 1 durchzuführen. Außerdem ist das Fahrzeug dazu ausgebildet, die Schritte S6 bis S7 gemäß Figur 2 durchzuführen.

Zusammenfassend weist zumindest eine der Ausführungsformen der Erfindung zumindest einen der folgenden Vorteile und/oder zumindest eines der folgenden Merkmale auf:

- Bestimmen eines Zeitpunkts an dem ein anliegendes Drehmoment minimal sein wird.
- Einfache und effiziente Zeitpunktberechnung.
- Verschleißreduziertes Schalten eines Fahrzeugs.

Obwohl die vorliegende Erfindung anhand bevorzugter Ausführungsbeispiele beschrieben wurde, ist sie nicht darauf beschränkt, sondern auf vielfältige Weise modifizierbar.

**Patentansprüche**

1.  Verfahren zum Vorhersagen eines Zeitpunkts eines zukünftigen Extremwerts (205) in einem Drehmomentverlauf (201) eines Fahrzeugs (1), insbesondere eines einspurigen Fahrzeugs (1) wie ein eBike, umfassend die Schritte:

    - Ermitteln (S1) eines Drehmomentwerts zu mehreren Zeitpunkten,
    - Bestimmen (S2) eines Extremwerts (204) der ermittelten Drehmomentwerte zu jedem Zeitpunkt,
    - Messen (S3) einer verstrichenen Zeit und/oder eines von einem Pedal des Fahrzeugs zurückgelegten Winkels seit dem Zeitpunkt, an dem der Extremwert (204) bestimmt worden ist,
    - Ermitteln (S4) einer Periodendauer (207) des Drehmomentverlaufs (201), und
    - Vorhersagen (S5) zumindest eines Zeitpunkts eines zukünftigen Extremwerts (205) anhand der ermittelten Periodendauer (207) sowie der gemessenen Zeit und/oder dem zurückgelegten Winkel.

2.  Verfahren gemäß Anspruch 1, wobei das Messen (S3) des von dem Pedal des Fahrzeugs zurückgelegten Winkels und/oder das Ermitteln (S4) der Periodendauer (207) mittels eines Drehzahlsensors erfolgt.

3.  Verfahren gemäß einem der Ansprüche 1-2, wobei das Messen (S3) der verstrichenen Zeit anhand eines Zeitmessers erfolgt, wobei der Zeitmesser zurückgesetzt wird, wenn ein neuer Extremwert (204) bestimmt wird.

4.  Verfahren gemäß einem der Ansprüche 1-3, wobei die Periodendauer (207) anhand eines Vergleichs der Zeitpunkte von zwei bestimmten Extremwerten (204) ermittelt wird.

5.  Verfahren gemäß einem der Ansprüche 1-4, wobei das Vorhersagen des zumindest einen Zeitpunkts des zukünftigen Extremwerts (205) lediglich dann erfolgt, wenn die gemessene Zeit größer als ein Schwellwert (208) ist.

6.  Verfahren gemäß einem der Ansprüche 1-5, wobei zum Bestimmen (S2) des Extremwerts (204) geprüft wird, ob ein aktuell ermittelter Drehmomentwert größer oder kleiner als ein aktueller Extremwert ist.

7.  Verfahren gemäß einem der Ansprüche 1-6, wobei die Zeitpunkte des nächsten (205) und des übernächsten Extremwerts (206) vorhergesagt werden.

8.  Verfahren zum Schalten eines Getriebes (3) eines Fahrzeugs (1), insbesondere eines einspurigen Fahrzeugs (1) wie ein eBike, umfassend die Schritte:

    - Vorhersagen eines Zeitpunkts, an dem ein an dem Fahrzeug anliegendes Drehmoment minimal ist anhand eines Verfahrens gemäß einem der Ansprüche 1-7, und
    - Schalten des Getriebes (3) des Fahrzeugs (1) zu dem vorhergesagten Zeitpunkt.

9.  Fahrzeug (1), insbesondere einspuriges Fahrzeug (1) wie ein eBike, auf das von einem Fahrer ein Drehmoment aufbringbar ist, sodass ein regelmäßiger Drehmomentverlauf (201) entsteht, umfassend:

    Einen Drehmomentsensor (4), ausgebildet zum Ermitteln eines Drehmomentwerts zu mehreren Zeitpunkten,
    Eine Bestimmungseinrichtung (5), ausgebildet zum Bestimmen eines Extremwerts (204) der ermittelten Drehmomentwerte,
    Eine Messeinrichtung (6), ausgebildet zum Messen einer verstrichenen Zeit und/oder eines von einem Pedal (7) des Fahrzeugs (1) zurückgelegten Winkels seit dem Zeitpunkt, an dem der Extremwert (204) bestimmt worden ist,
    Eine Ermittlungseinrichtung (8), ausgebildet zum Ermitteln einer Periodendauer (207) des Drehmomentverlaufs,
    Eine Vorhersageeinrichtung (9), ausgebildet zum Vorhersagen zumindest eines Zeitpunkts eines zukünftigen Extremwerts (205) anhand der ermittelten Periodendauer (207) sowie der gemessenen Zeit und/oder dem zurückgelegten Winkel.

10. Fahrzeug (1) gemäß Anspruch 9, umfassend eine Schalteinrichtung, die dazu ausgebildet ist, ein Getriebe (3) des Fahrzeugs (1) zu einem Zeitpunkt zu schalten, an dem die Vorhersageeinrichtung (9) ein Minimum vorhergesagt hat.

**Claims**

1.  Method for predicting a time of a future extreme value (205) in a torque profile (201) of a vehicle (1), in particular a single-track vehicle (1) such as an ebike, comprising the steps of:

    - determining (S1) a torque value at multiple times,
    - identifying (S2) an extreme value (204) in the determined torque values at each time,
    - measuring (S3) an elapsed time and/or an angle covered by a pedal of the vehicle since the time at which the extreme value (204) was identified,
- determining (S4) a period duration (207) of the torque profile (201), and
- predicting (S5) at least one time of a future extreme value (205) on the basis of the determined period duration (207) and the measured time and/or the covered angle.

2. Method according to Claim 1, wherein the measurement (S3) of the angle covered by the pedal of the vehicle and/or the determination (S4) of the period duration (207) is carried out by means of a speed sensor.

3. Method according to either of Claims 1-2, wherein the measurement (S3) of the elapsed time is carried out on the basis of a timer, the timer being reset when a new extreme value (204) is identified.

4. Method according to one of Claims 1-3, wherein the period duration (207) is determined on the basis of a comparison of the times of two identified extreme values (204).

5. Method according to one of Claims 1-4, wherein the at least one time of the future extreme value (205) is predicted only if the measured time is greater than a threshold value (208).

6. Method according to one of Claims 1-5, wherein identifying (S2) the extreme value (204) involves checking whether a currently determined torque value is greater than or less than a current extreme value.

7. Method according to one of Claims 1-6, wherein the times of the next extreme value (205) and the next-but-one extreme value (206) are predicted.

8. Method for shifting a gear mechanism (3) of a vehicle (1), in particular a single-track vehicle (1) such as an ebike, comprising the steps of:

- predicting a time at which a torque applied to the vehicle is at a minimum on the basis of a method according to one of Claims 1-7, and
- shifting the gear mechanism (3) of the vehicle (1) at the predicted time.

9. Vehicle (1), in particular a single-track vehicle (1) such as an ebike, to which a rider can apply a torque such that a regular torque profile (201) arises, comprising:

a torque sensor (4) designed to determine a torque value at multiple times,

an identification device (5) designed to identify an extreme value (204) in the determined torque values,

a measuring device (6) designed to measure an elapsed time and/or an angle covered by a pedal (7) of the vehicle (1) since the time at which the extreme value (204) was identified,

a determination device (8) designed to determine a period duration (207) of the torque profile,

a prediction device (9) designed to predict at least one time of a future extreme value (205) on the basis of the determined period duration (207) and the measured time and/or the covered angle.

10. Vehicle (1) according to Claim 9, comprising a shifting device designed to shift a gear mechanism (3) of the vehicle (1) at a time at which the prediction device (9) has predicted a minimum.

**Revendications**

1. Procédé de prédiction d'un moment d'une valeur extrême future (205) dans une courbe de couple de rotation (201) d'un véhicule (1), en particulier d'un véhicule à roues alignées (1) tel qu'un vélo électrique, comprenant les étapes :

- détermination (S1) d'une valeur de couple de rotation à plusieurs moments,
- définition (S2) d'une valeur extrême (204) des valeurs de couple de rotation déterminées à chaque moment,
- mesure (S3) d'un temps écoulé et/ou d'un angle parcouru par une pédale du véhicule depuis le moment où la valeur extrême (204) a été définie,
- détermination (S4) d'une durée de période (207) de la courbe de couple de rotation (201), et
- prédiction (S5) d'au moins un moment d'une valeur extrême future (205) à l'aide de la durée de période (207) déterminée et du temps mesuré et/ou de l'angle parcouru.

2. Procédé selon la revendication 1, la mesure (S3) de l'angle parcouru par la pédale du véhicule et/ou la détermination (S4) de la durée de période (207) étant effectuées au moyen d'un capteur de vitesse de rotation.

3. Procédé selon l'une des revendications 1 et 2, la mesure (S3) du temps écoulé étant effectuée à l'aide d'un garde-temps, le garde-temps étant réinitialisé lorsqu'une nouvelle valeur extrême (204) est définie.

**4.** Procédé selon l'une des revendications 1 à 3, la durée de période (207) étant déterminée à l'aide d'une comparaison des moments de deux valeurs extrêmes (204) définies.

**5.** Procédé selon l'une des revendications 1 à 4, la prédiction de l'au moins un moment de la valeur extrême future (205) étant effectuée seulement lorsque le temps mesuré est supérieur à une valeur de seuil (208).

**6.** Procédé selon l'une des revendications 1 à 5, le fait de savoir si une valeur de couple de rotation actuellement déterminée est supérieure ou inférieure à une valeur extrême actuelle étant vérifié pour définir (S2) la valeur extrême (204).

**7.** Procédé selon l'une des revendications 1 à 6, les moments de la valeur extrême suivante (205) et de la deuxième valeur extrême suivante (206) étant prédits.

**8.** Procédé de changement de vitesse d'une transmission (3) d'un véhicule (1), en particulier d'un véhicule à roues alignées (1) tel qu'un vélo électrique, comprenant les étapes :

     - prédiction d'un moment auquel un couple de rotation appliqué sur le véhicule est minimal à l'aide d'un procédé selon l'une des revendications 1-7 et
     - changement de vitesse de la transmission (3) du véhicule (1) au moment prédit.

**9.** Véhicule (1), en particulier véhicule à roues alignées (1) tel qu'un vélo électrique, sur lequel un couple de rotation peut être appliqué par un conducteur, si bien qu'une courbe de couple de rotation régulière (201) est créée, comprenant :

     un capteur de couple de rotation (4), formé pour déterminer une valeur de couple de rotation à plusieurs moments,
     un dispositif de définition (5), formé pour définir une valeur extrême (204) des valeurs de couples de rotation déterminées,
     un dispositif de mesure (6), formé pour mesurer un temps écoulé et/ou un angle parcouru par une pédale (7) du véhicule (1) depuis le moment auquel la valeur extrême (204) a été définie,
     un dispositif de détermination (8), formé pour déterminer une durée de période (207) de la courbe de couple de rotation,
     un dispositif de prédiction (9) formé pour prédire au moins un moment d'une valeur extrême future (205) à l'aide de la durée de période (207) déterminée et du temps mesuré et/ou de l'angle parcouru.

**10.** Véhicule (1) selon la revendication 9, comprenant un dispositif de changement de vitesse qui est formé pour changer la vitesse d'une transmission (3) du véhicule (1) à un moment où le dispositif de prédiction (9) a prédit un minimum.

dt_min

(dt_min2)

S5

dt

T

S3

101 102

S2

S4

S1

Fig. 1

Fig. 2

EP 4 389 575 B1

Fig. 3

EP 4 389 575 B1

Fig. 4

**EP 4 389 575 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2021061414 A1